(19) Europäisches Patentamt
European Patent Office
Office européen des brevets

(11) **EP 3 825 200 B1**

(12) **FASCICULE DE BREVET EUROPEEN**

(45) Date de publication et mention
de la délivrance du brevet:
**12.07.2023 Bulletin 2023/28**

(21) Numéro de dépôt: **20207405.0**

(22) Date de dépôt: **13.11.2020**

(51) Classification Internationale des Brevets (IPC):
***B61D 27/00*** *(2006.01)* ***B60H 1/00*** *(2006.01)*

(52) Classification Coopérative des Brevets (CPC):
**B61D 27/00; B60H 1/00371; B60H 1/00742;
B60H 1/008**

(54) **PROCÉDÉ ET SYSTÈME DE SURVEILLANCE D'UN CAPTEUR DE CO2 MONTÉ SUR UN VÉHICULE DE TRANSPORT FERROVIAIRE**

ÜBERWACHUNGSVERFAHREN UND -SYSTEM EINES AUF EINEM SCHIENENTRANSPORTFAHRZEUG MONTIERTEN CO2-SENSORS

METHOD AND SYSTEM FOR MONITORING A CO2 SENSOR MOUNTED ON A RAILWAY TRANSPORT VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.11.2019 FR 1912878**

(43) Date de publication de la demande:
**26.05.2021 Bulletin 2021/21**

(73) Titulaire: **SNCF Voyageurs
93200 Saint-Denis (FR)**

(72) Inventeurs:
• **Goeres, David
72000 Le Mans (FR)**
• **Planchette, Loïc
72100 Le Mans (FR)**

(74) Mandataire: **Bringer IP
1, Place du Président Thomas Wilson
31000 Toulouse (FR)**

(56) Documents cités:
**EP-A2- 2 272 731 FR-A1- 2 691 677
JP-A- 2014 189 155**

**Description**

**Domaine technique de l'invention**

L'invention concerne un procédé et un système de surveillance d'au moins un capteur de CO2 agencé dans un compartiment d'un véhicule de transport ferroviaire et destiné à mesurer la quantité de CO2 présent dans ce compartiment.

**Arrière-plan technologique**

Dans tout le texte, le terme « compartiment » désigne tout espace intérieur d'un véhicule de transport ferroviaire destiné à accueillir des passagers, des personnels d'équipage ou des êtres, animaux, équipements, etc. nécessitant d'évoluer dans un environnement à taux de CO2 contrôlé. Il peut s'agir d'un wagon de passagers, d'une cabine de pilotage, d'un wagon de fret et de manière générale de toute zone du véhicule de transport qui nécessite un air à taux de CO2 contrôlé.

Dans la suite de la demande, on entend par « véhicule de transport ferroviaire » tout type de véhicule circulant sur des pistes de roulement telles que des voies ferrées équipées de rails, tels que par exemple et de manière non limitative un train, un métro, ou un tramway.

Actuellement, les capteurs de CO2 embarqués à bord des wagons des véhicules de transport ferroviaire mesurent la quantité de CO2 contenu dans les wagons et fonctionnent comme des systèmes autonomes qui ne fournissent aucune information relative au bon fonctionnement du capteur. Seule une maintenance régulière des capteurs par comparaison/étalonnage permet de garantir le bon fonctionnement de ces capteurs. De plus, les fournisseurs de capteurs de CO2 recommandent de procéder à des nettoyages bisannuels des capteurs de façon préventive.

JP 2014 189155 décrit par exemple un système de ventilation pour véhicule ferroviaire comprenant un ventilateur permettant l'introduction d'air extérieur dans un compartiment, un dispositif de contrôle du ventilateur et un module de communication. JP 2014 189155 décrit également un dispositif de conditionnement d'air pour ledit véhicule ferroviaire, ledit dispositif comprenant des capteurs de température de l'air, un compresseur, un condenseur et un évaporateur. Un capteur de pression, un capteur infrarouge de détection de la présence d'un être humain et un capteur de CO2 peuvent également être prévus afin de détecter le nombre de passagers dans ledit compartiment et afin que le système de ventilation commande le fonctionnement dudit ventilateur en fonction du nombre de passagers.

A ce jour, aucun système ne permet de contrôler à distance l'état de fonctionnement d'un capteur de CO2 embarqué sur un véhicule de transport ferroviaire.

Il est important de vérifier l'état de ces capteurs de CO2 agencés dans un compartiment d' autant plus que des personnes sont amenées à respirer l'air intérieur de ce compartiment. Il est préférable que les quantités de CO2 contenues dans le compartiment n'atteignent pas une valeur de l'ordre de 1000ppm. En effet, à une telle valeur, le CO2 devient nocif pour l'homme et peut provoquer des maladies telles que l'asthme. Il est donc primordial de contrôler l'état des capteurs de CO2 afin d'éviter la dérive de ces capteurs.

Une maintenance régulière des capteurs est longue et nécessite la mise en place de procédures particulières. Ces opérations de nettoyage et d'étalonnage sont peu compatibles avec les impératifs d'exploitation des véhicules de transport ferroviaire. En particulier, ces opérations de nettoyage bloquent les véhicules dans les ateliers de maintenance, ce qui génère des coûts importants pour les exploitants.

En outre, la dérive d'un capteur peut induire une surconsommation d'énergie (un apport d'air extérieur trop important) ou à l'inverse un inconfort pour les passagers en raison d'un taux élevé de dioxyde de carbone (manque d'apport d'air extérieur) dans le compartiment.

A ce titre, les inventeurs ont cherché une solution pour permettre de surveiller à distance l'état de fonctionnement des capteurs de CO2 agencés dans des compartiments d'un véhicule de transport ferroviaire.

**Objectifs de l'invention**

L'invention vise à fournir un procédé et un système de surveillance d'un capteur de CO2 agencé dans un compartiment d'un véhicule de transport ferroviaire qui pallie au moins certains des inconvénients des solutions connues.

En particulier, l'invention vise à fournir un tel procédé et système de surveillance qui permet de contrôler la cohérence des données fournies par le capteur de CO2 agencé dans le compartiment du véhicule de transport ferroviaire qu'il équipe.

L'invention vise aussi à fournir, un tel procédé et système de surveillance qui permet d'anticiper un dysfonctionnement du capteur de CO2 surveillé.

L'invention vise également à fournir, dans au moins un mode de réalisation, un procédé et un système qui permet d'automatiser la surveillance du capteur de CO2.

L'invention vise également à fournir, dans au moins un mode de réalisation, un procédé et un système qui permet d'alerter un opérateur de la défaillance du capteur de $CO_2$.

L'invention vise aussi à fournir, dans au moins un mode de réalisation, un tel procédé et système de surveillance qui permet de surveiller une pluralité de capteurs montés sur une pluralité de véhicules de transport ferroviaire.

## Exposé de l'invention

Pour ce faire, l'invention concerne un procédé de surveillance d'au moins un capteur de $CO_2$ agencé dans un compartiment d'un véhicule de transport ferroviaire destiné à effectuer au moins un trajet prédéterminé entre deux points d'un réseau ferroviaire emprunté par ledit véhicule.

Le procédé de surveillance selon l'invention comprend au moins les étapes suivantes :

- une étape d'acquisition de données représentatives de la quantité de $CO_2$ contenu dans l'air intérieur dudit compartiment fournies par au moins un capteur $CO_2$ surveillé, dites données $CO_2{}_{int}$, et de données représentatives de la quantité de $CO_2$ contenu dans l'air extérieur audit compartiment, dites données $CO_2{}_{ext}$,
- une étape de calcul d'un taux réel d'occupation dudit compartiment à partir desdites données $CO_2{}_{int}$ et $CO_2{}_{ext}$, d'informations représentatives de la quantité d'air injecté dans ledit compartiment, dites informations Qair, et d'informations représentatives du nombre de places assises libres dans ledit compartiment, dites informations Places,
- une étape de comparaison dudit taux réel d'occupation du compartiment calculé, dit Txréel, par rapport à un taux estimé d'occupation dudit compartiment, dit Txest, obtenu à partir d'informations représentatives du nombre de passagers à l'intérieur dudit compartiment, dites informations Passagers,
- une étape de mesure d'un écart, dit écart de dérive, entre Txréel et Txest supérieur à une valeur seuil prédéterminée, et
- une étape de signalement d'un défaut probable dudit capteur de $CO_2$ surveillé lorsque ledit écart de dérive est mesuré *n* fois sur un nombre *m* de trajets prédéterminés.

Un procédé selon l'invention permet donc la surveillance d'au moins un capteur de $CO_2$ agencé dans un compartiment d'un véhicule de transport ferroviaire afin de maintenir une certaine qualité de l'air dans un compartiment.

En particulier, un procédé selon l'invention permet de fournir à un opérateur situé à distance dudit véhicule de transport ferroviaire, des informations actualisées en temps réel (ou quasi réel) sur le fonctionnement d'un capteur de $CO_2$.

Les données représentatives de la quantité de $CO_2$ contenu dans l'air intérieur dudit compartiment sont fournies par au moins un capteur de $CO_2$ surveillé et agencé dans ledit compartiment. Par exemple, un compartiment peut comprendre plusieurs capteurs de $CO_2$.

Les données représentatives de la quantité de $CO_2$ contenu dans l'air extérieur audit compartiment sont fournies, par exemple, par au moins un capteur $CO_2$ agencé à l'extérieur dudit compartiment. Ledit capteur extérieur audit compartiment est agencé sur ledit véhicule de transport afin de mesurer la quantité de $CO_2$ extérieur contenu dans l'air au cours du trajet prédéterminé. Selon une autre variante, la quantité de $CO_2$ contenu dans l'air extérieur audit compartiment est obtenue à partir de valeurs recensées par un Organisme spécialiste de la composition de l'air et concentration en $CO_2$ dans l'air extérieur.

Le capteur de $CO_2$ agencé à l'intérieur ou à l'extérieur dudit compartiment mesure des données représentatives de la quantité de $CO_2$ qui peuvent être, par exemple, des mesures en continu ou des mesures horodatées.

Les mesures horodatées permettent d'associer une donnée représentative de la quantité de $CO_2$ à un instant précis, ce qui permet de corréler les différentes données acquises ou calculées par le procédé de surveillance à des horaires précis.

L'invention permet de calculer un taux réel d'occupation du compartiment équipé du capteur surveillé. On entend par l'expression « taux réel d'occupation » une valeur en pourcentage qui correspond à l'occupation réelle du compartiment du véhicule de transport ferroviaire par des passagers effectuant le trajet prédéterminé entre deux points du réseau ferroviaire emprunté par le véhicule. Ce taux est calculé à partir de données actualisées en temps réel ou quasi-réel.

L'invention permet en outre de comparer le taux réel d'occupation du compartiment à un taux estimé d'occupation du compartiment. On entend par l'expression « taux estimé d'occupation » une valeur en pourcentage qui correspond à l'occupation estimée du compartiment du véhicule à partir d'informations représentatives du nombre de passagers présents à l'intérieur du compartiment. Ces informations sont par exemple dérivées des informations de vente des billets d'accès audit véhicule. Il s'agit du pourcentage d'occupation du compartiment du véhicule par des passagers pendant le trajet prédéterminé.

Le procédé permet en outre de mesurer un écart entre Txréel et Txest, qui lorsqu'il est supérieur à une valeur seuil prédéterminée, traduit une dérive du capteur de $CO_2$ surveillé.

Ladite valeur seuil prédéterminée pour estimer qu'un écart de dérive est avéré correspond à une valeur égale ou supérieure à au moins 10% et de préférence supérieure à 15%.

En d'autres termes, si ledit écart entre Txréel et Txest est supérieur à la valeur seuil prédéterminée, un écart de dérive est constaté.

Le procédé permet en outre de signaler un défaut probable du capteur de CO2 surveillé, lorsque ledit écart de dérive est mesuré *n* fois sur un nombre *m* de trajets prédéterminés.

Selon une variante, ledit écart de dérive est mesuré *n* fois sur un nombre *m* de trajets prédéterminés où *n* et *m* sont au moins supérieur ou égal à 1, de préférence compris entre 1 et 10.

Lorsqu'un défaut probable du capteur est signalé, une opération de maintenance peut être programmée sur ledit véhicule.

Le procédé de surveillance selon l'invention permet par conséquence de prévenir la défaillance d'au moins un capteur de CO2 et ainsi de diminuer le risque qu'un véhicule de transport ferroviaire circule avec des capteurs de CO2 défaillants. En effet, lesdits capteurs de CO2 défaillants ne permettent pas d'effectuer des mesures correctes des données représentatives de la quantité de CO2 contenu dans l'air dudit compartiment et par conséquent ne permettent pas le contrôle et la régulation de la qualité de l'air en CO2 dans un compartiment du véhicule de transport.

En outre, le procédé de surveillance selon l'invention permet de réaliser la surveillance d'au moins un capteur de CO2 à distance ce qui permet un contrôle de manière automatisée et simplifiée.

Un opérateur situé à distance dudit capteur de CO2 surveillé est par exemple averti d'une défaillance du capteur de CO2 surveillé par l'affichage d'une alerte.

Une alerte peut par exemple être un signal lumineux sous la forme d'un voyant lumineux sur un panneau de contrôle situé à distance dudit véhicule comprenant ledit capteur de CO2 surveillé ou un signal sonore ou un message d'alerte diffusé à travers tout support permettant de retranscrire une information visuelle ou sonore tel que par exemple un écran de téléphone mobile d'un opérateur en charge de la maintenance.

Avantageusement et selon l'invention, ledit taux réel d'occupation dudit compartiment, Txréel, est calculé par l'équation suivante :

[Math 1]

$$\text{Txréel} = \frac{\left[\dfrac{(\text{CO2int} - \text{CO2ext}) * \text{CO2voy}}{\text{Qair}}\right]}{\text{Places}} * 100$$

Où CO2voy est fonction de la quantité de CO2 émis par un passager dudit compartiment.

Selon cette variante, le taux réel d'occupation est obtenu en partie avec des données en temps réel obtenues à partir dudit capteur de CO2 surveillé. La valeur CO2voy correspond à une valeur prédéterminée de quantité de CO2 émise par un passager calculée de manière empirique par exemple.

Selon cette variante, le taux réel d'occupation est obtenu en partie avec des données en temps réel obtenues à partir dudit capteur de CO2 surveillé. La valeur CO2voy correspond à une valeur fixe de quantité de CO2 émise par un passager qui peut être comprise entre 10 et 100 grammes de CO2 par heure.

Par exemple, lesdites données représentatives de la quantité de CO2 contenu dans l'air sont exprimées en partie par million (ppm).

Avantageusement et selon l'invention, lesdites informations Qair sont issues de mesures de la quantité d'air injecté par un système de climatisation dans ledit compartiment et fournies par une base de données distante.

Selon cette variante, lesdites informations représentatives de la quantité d'air injecté dans ledit compartiment, dites informations Qair, sont fournies par une base de données distante regroupant l'ensemble des données relatives au système de conditionnement de l'air embarqué par ledit véhicule de transport ferroviaire. Cette base de données comprend des données telles que par exemple le débit d'air injecté dans le compartiment lors dudit trajet prédéterminé.

Avantageusement et selon l'invention, lesdites informations représentatives du nombre de places assises libres dans ledit compartiment et lesdites informations représentatives du nombre de passagers à l'intérieur dudit compartiment sont fournies par une base de données de gestion des ventes de billets d'accès audit véhicule.

Selon cette variante, une base de données de gestion des ventes de billets d'accès audit véhicule fournit les informations permettant de connaître d'une part le nombre exact de places assises libres, c'est-à-dire les places assises non occupées par un passager et pouvant accueillir un passager assis, et d'autre part le nombre de passagers présents à l'intérieur dudit compartiment.

Ladite base de données de gestion des ventes de billets d'accès audit véhicule est formée à partir de données relatives des missions commerciales de chaque véhicule et de leur localisation. Les éléments présents dans la base de données peuvent par exemple être l'identification du véhicule (numéro de véhicule et numéro du compartiment), l'identification du trajet prédéterminé (date dudit trajet, heure de départ du véhicule, heure d'arrivée du véhicule, point de départ et point d'arrivée du véhicule sur un réseau ferroviaire, etc.).

Avantageusement et selon l'invention, lesdites données représentatives de la quantité de CO2 contenu dans l'air sont des mesures de CO2 effectuées par ledit capteur de CO2 surveillé correspondant à une concentration de CO2 dans ledit compartiment.

Selon cette variante, ledit capteur de CO2 permet d'effectuer des mesures de CO2 en temps réel ou quasi-réel dans un compartiment d'un véhicule ferroviaire destiné à effectuer au moins un trajet prédéterminé entre deux points d'un réseau ferroviaire emprunté par ledit véhicule.

De préférence, ledit capteur de CO2 effectue au moins deux mesures de CO2 dans ledit compartiment pendant ledit trajet prédéterminé, une première mesure de CO2 à un premier point correspondant au point de départ dudit véhicule pour un trajet prédéterminé et une deuxième mesure de CO2 à un deuxième point correspondant au point d'arrivée dudit véhicule. Ainsi, une valeur moyenne de CO2 contenu dans ledit compartiment est établie pour ledit trajet prédéterminé à partir de la première mesure de CO2 et de la deuxième mesure de CO2.

L'invention concerne également un produit programme d'ordinateur téléchargeable depuis un réseau de communication et/ou enregistré sur un support lisible par ordinateur et/ou exécutable par un processeur, caractérisé en ce qu'il comprend des instructions de code de programme pour la mise en oeuvre du procédé de surveillance selon l'invention, lorsqu'un programme est exécuté sur un ordinateur.

L'invention concerne également un moyen de stockage lisible par ordinateur, totalement ou partiellement amovible, stockant un programme d'ordinateur comprenant un jeu d'instructions exécutables par un ordinateur pour mettre en oeuvre le procédé de surveillance selon l'invention.

L'invention concerne également un système de surveillance d'au moins un capteur CO2 agencé dans un compartiment d'un véhicule de transport ferroviaire destiné à effectuer au moins un trajet prédéterminé entre deux points d'un réseau ferroviaire emprunté par ledit véhicule, ledit système comprenant :

- au moins un capteur CO2,
- un module d'acquisition de données représentatives de la quantité de CO2 contenu dans l'air intérieur dudit compartiment fournies par le au moins un capteur CO2 surveillé, dites données $CO2_{int}$, et de données représentatives de la quantité de CO2 contenu dans l'air extérieur audit compartiment, dites données $CO2_{ext}$,
- une unité de lecture et de calcul adaptée pour recevoir lesdites données $CO2_{int}$ et $CO2_{ext}$, des informations représentatives de la quantité d'air injecté dans ledit compartiment, dites informations Qair, et des informations représentatives du nombre de places assises libres dans ledit compartiment, dites informations Places, et configurée pour calculer un taux réel d'occupation dudit compartiment, dit Txréel, à partir desdites données $CO2_{int}$ et $CO2_{ext}$, desdites informations Qair, et desdites informations Places,
- un module de comparaison de Txréel par rapport à un taux estimé d'occupation dudit compartiment, dit Txest, obtenu à partir des données représentatives du nombre de passagers à l'intérieur dudit compartiment, dites informations Passagers,
- un module de mesure d'un écart, dit écart de dérive, entre Txréel et Txest supérieur à une valeur seuil prédéterminée, et
- un module de signalement adapté pour avertir d'un défaut probable dudit capteur de CO2 surveillé lorsque ledit écart de dérive est mesuré *n* fois sur un nombre *m* de trajets prédéterminés.

Un système selon l'invention met avantageusement en oeuvre un procédé selon l'invention et un procédé selon l'invention est avantageusement mis en oeuvre par un système selon l'invention.

Dans tout le texte, on désigne par module, un élément logiciel, un sous-ensemble d'un programme logiciel, pouvant être compilé séparément, soit pour une utilisation indépendante, soit pour être assemblé avec d'autres modules d'un programme, ou un élément matériel, ou une combinaison d'un élément matériel et d'un sous-programme logiciel. Un tel élément matériel peut comprendre un circuit intégré propre à une application (plus connue sous l'acronyme ASIC pour la dénomination anglaise *Application-Specific Integrated Circuit*) ou un circuit logique programmable (plus connu sous l'acronyme FPGA pour la dénomination anglaise *Field-Programmable Gate Array*) ou un circuit de microprocesseurs spécialisés (plus connu sous l'acronyme DSP pour la dénomination anglaise *Digital Signal Processor*) ou tout matériel équivalent ou toute combinaison des matériels précités. D'une manière générale, un module est donc un élément (logiciel et/ou matériel) qui permet d'assurer une fonction.

En outre, ledit module de comparaison et ledit module de mesure d'un écart sont logés dans ladite unité de calcul.

Les avantages et effets techniques du procédé selon l'invention s'appliquent mutatis mutandis à un système selon l'invention.

Avantageusement et selon l'invention, ledit module d'acquisition est destiné à collecter les données fournies par des capteurs de CO2 surveillés et agencés dans différents compartiments dudit véhicule de transport ferroviaire.

Selon cette variante, les données relatives à la quantité de CO2 contenu dans l'air intérieur dudit compartiment sont acquises en temps réel ou quasi-réel dans plusieurs compartiments dudit véhicule, de préférence dans l'ensemble des compartiments du véhicule afin de pouvoir surveiller simultanément l'ensemble des capteurs agencés sur le même véhicule.

Avantageusement et selon l'invention, ledit module d'acquisition est destiné à collecter les données fournies par des capteurs de CO2 surveillés et agencés dans différents compartiments de plusieurs véhicules de transport ferroviaire.

Selon cette variante, les données relatives à la quantité de CO2 sont acquises pour différents compartiments de plusieurs véhicules, et de préférence pour l'ensemble des compartiments de tous les véhicules de transport ferroviaire équipés d'au moins un capteur de CO2. Aussi, cette variante permet la surveillance de l'ensemble des capteurs de CO2 agencés dans des véhicules de transport ferroviaire circulant sur un réseau ferroviaire.

L'invention concerne également un procédé de surveillance et un système de surveillance d'au moins un capteur de CO2, caractérisés en combinaison par tout ou partie des caractéristiques mentionnées ci-dessus ou ci-après.

## Liste des figures

D'autres buts, caractéristiques et avantages de l'invention apparaîtront à la lecture de la description suivante donnée à titre uniquement non limitatif et qui se réfère aux figures annexées dans lesquelles :

[Fig. 1] est une vue schématique d'un système selon un mode de réalisation de l'invention.
[Fig. 2] est une vue schématique d'un procédé selon un mode de réalisation de l'invention.

## Description détaillée d'un mode de réalisation de l'invention

Sur les figures, les échelles et les proportions ne sont pas strictement respectées et ce, à des fins d'illustration et de clarté.

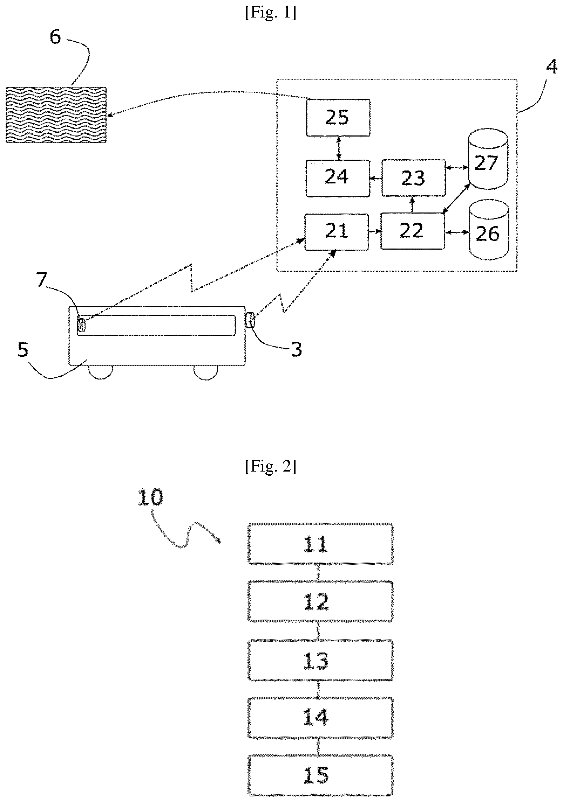

La figure 1 illustre schématiquement un système de surveillance selon un mode de réalisation de l'invention mettant en oeuvre un procédé de surveillance selon un mode de réalisation de l'invention et représenté schématiquement sur la figure 2.

La figure 1 illustre schématiquement un système de surveillance selon un mode de réalisation de l'invention mettant en oeuvre un procédé selon un mode de réalisation de l'invention et représenté schématiquement sur la figure 2. A des fins de clarté, un seul compartiment est représenté sur la figure 2.

Un véhicule de transport ferroviaire, dit train, comprend par exemple quatre compartiments 5, chacun étant équipé d'un capteur 7 de CO2 agencé à l'intérieur du compartiment 5. Les capteurs CO2 sont de type à absorption à infrarouge. Ils sont agencés par exemple au niveau de la partie supérieure du compartiment (plafond) et permettent d'enregistrer des mesures de CO2 contenu dans l'air du compartiment qui sont exprimées par exemple en ppm.

Un capteur 3 externe de CO2 est placé à l'extérieur du véhicule et mesure la quantité de CO2 extérieur.

Les capteurs 7 de CO2 sont répartis dans les quatre compartiments et enregistrent des mesures de CO2 pendant un trajet prédéterminé entre un point A et un point B du réseau ferroviaire emprunté par le train qui sont transmises à un module 21 d'acquisition de données, par exemple par des moyens sans fil.

Le module 21 d'acquisition est par exemple mis en oeuvre par des moyens logiciels et fournit à l'unité 22 de lecture et de calcul, les mesures fournies par les capteurs de CO2, par le biais de moyens de transmission.

Le module 21 d'acquisition met en oeuvre l'étape 11 du procédé de surveillance.

L'unité 22 de lecture et de calcul se base sur des données acquises par les capteurs CO2 (quantité de $CO2_{int}$ et de $CO2_{ext}$) mais également sur des données issues de bases de données pour calculer le taux réel d'occupation du compartiment en mettant en oeuvre l'étape 12 du procédé de surveillance selon l'invention.

Plus précisément, l'unité 22 de lecture et de calcul utilise les données Qair relatives à la quantité d'air injecté dans le compartiment et issues de la base 26 de données distante et également les informations Places relatives au nombre de places assises libres issues de la base 27 de données de gestion des ventes de billets d'accès audit véhicule.

Le système comprend en outre un module 23 de comparaison du Txréel par rapport à un taux estimé d'occupation dudit compartiment, dit Txest. Le module 23 de comparaison utilise les informations Passagers relatives au nombre de passagers à l'intérieur du compartiment issues de la base 27 de données de gestion des ventes de billets d'accès audit véhicule. Le module 23 de comparaison met en oeuvre l'étape 13 du procédé selon l'invention.

Le système comprend également un module 24 de mesure d'un écart permettant de mesurer l'écart de dérive entre le taux réel d'occupation du compartiment 5 et un taux estimé d'occupation du compartiment 5 pour un même trajet prédéterminé. Ce taux estimé d'occupation est obtenu à partir d'informations passagers contenues dans la base 27 de données de gestion des ventes de billets d'accès audit véhicule.

Le module 24 de mesure d'un écart met en oeuvre l'étape 14 du procédé de surveillance selon l'invention.

Ce système comprend également des moyens de transmission des données $CO2_{int}$ et $CO2_{ext}$ à l'unité 22 de lecture et de calcul.

Enfin, un module 25 de signalement permet d'avertir d'un défaut probable du capteur 7 de CO2 surveillé par le biais d'un affichage d'un signal lumineux sur un panneau 6 de contrôle à distance accessible par un opérateur.

Ce module 25 de signalement met en oeuvre l'étape 15 du procédé de surveillance selon l'invention.

Les différents modules du système selon le mode de réalisation des figures peuvent être intégrés dans un équipement informatique 4 comprenant un processeur, une mémoire de stockage et des moyens de communication avec les capteurs de CO2.

Les différents modules d'un système selon l'invention et les bases de données associées peuvent, selon un mode de réalisation de l'invention, être déportés sur un serveur cloud distant ou tout moyen équivalent. Dans ce mode de réalisation déporté, les données fournies par les capteurs de CO2 sont transmises aux modules du système par des moyens de communication qui peuvent être des réseaux sans fil. Un réseau filaire peut indifféremment être un réseau électrique, un réseau optique, un réseau magnétique et de manière générale tout type de réseau permettant de transmettre des données. Un réseau sans fil peut être de tous types connus, sécurisé ou non sécurisé. Un tel réseau est par exemple un réseau Wi-Fi (c'est-à-dire suivant la norme IEEE 802.11), mais on comprendra que l'invention s'applique à toute technologie sans fil. On citera notamment d'autres technologies par ondes radio telles que la technologie WiMax®, Bluetooth®, 3G, 4G, ou future 5G.

Le procédé va être décrit en prenant l'exemple d'un capteur de CO2 agencé dans un compartiment d'un train destiné à faire un trajet d'une durée d'une heure et 30 minutes entre un point de départ A et un point d'arrivée B.

Il est considéré comme référence qu'un passager émet environ 40g de CO2 par heure. Lors du trajet de 1h30, un passager produit environ 60g de CO2.

Le capteur de CO2 agencé au plafond du compartiment du train et effectue deux mesures de CO2 contenu à l'intérieur du compartiment, une première mesure est enregistrée au point de départ A et une seconde mesure est enregistrée au point d'arrivée B. La première mesure de CO2 au point A s'élève à 1700ppm soit 1,7g/L et la seconde mesure de CO2 prise au point B s'élève à 1900ppm soit 1,9g/L. Par conséquent, la valeur moyenne de $CO2_{int}$ est donc de 1800ppm soit 1,8g/L.

Les mesures de CO2 à l'extérieur du compartiment sont fournies par des organismes spécialisés tels que l'ANSES ou des observatoires suivant l'évolution du CO2 dans l'air extérieur. Aussi, la valeur de CO2 à l'extérieur du compartiment prise comme référence est 400ppm soit 0,4g/L.

La quantité d'air injecté Qair dans le compartiment pendant le trajet par un système de conditionnement d'air est fournie par une base 26 de données distante où Qair équivaut à 8 litres d'air injecté dans le compartiment pour le trajet de 1h30.

Selon ce mode de réalisation, le compartiment du train comprend 48 places assises. La base 27 de données de gestion des ventes de billets d'accès audit véhicule permet de connaître les informations représentatives du nombre de places assises libres dans le compartiment, dites informations Places, et les informations représentatives du nombre de passagers à l'intérieur dudit compartiment, dites informations Passagers.

Aussi, on dénombre 27 voyageurs qui ont acheté leur billet pour une place assise dans le compartiment. Les informations Passagers correspondant au nombre de voyageurs ayant acheté un billet pour une place assise dans le compartiment sont donc égales à 27.

Les informations Places correspondent à la différence entre le nombre de places totales assises égal à 60 dans un compartiment avec le nombre de voyageurs ayant acheté un billet pour une place assise égal à 27. Les informations Places sont donc égales à 33.

A partir des informations ci-dessus, le taux réel d'occupation peut être calculé à l'aide de l'équation suivante :

[Math 2]

$$Txr\acute{e}el = \frac{\left[\dfrac{(CO2int - CO2ext) * CO2voy}{Qair}\right]}{Places} * 100$$

$$Txr\acute{e}el = \frac{\left[\dfrac{(1{,}8 - 0{,}4) * 60}{8}\right]}{33} * 100$$

Le Txréel calculé s'élève donc à 31,8%.

A partir des informations Passagers, le taux estimé d'occupation peut être obtenu. Le Txest correspond au pourcentage d'occupation estimée du compartiment c'est-à-dire Txest = 27*100/60, donc Txest est égal à 45%.

On observe donc un écart en Txréel et Txest de 13,2%. La valeur seuil étant selon ce mode de réalisation de 10%, on constate donc un écart de dérive.

Si cet écart de dérive se reproduit selon ce mode de réalisation plus de 4 fois sur 3 trajets consécutifs alors un signalement d'un défaut du capteur surveillé est effectué afin que la maintenance soit programmée pour le capteur défaillant.

**Revendications**

1. Procédé (10) de surveillance d'au moins un capteur de CO2 agencé dans un compartiment (5) d'un véhicule de transport ferroviaire destiné à effectuer au moins un trajet prédéterminé entre deux points d'un réseau ferroviaire emprunté par ledit véhicule, comprenant au moins les étapes suivantes :

   - une étape d'acquisition (11) de données représentatives de la quantité de CO2 contenu dans l'air intérieur dudit compartiment fournies par au moins un capteur (7) de CO2 surveillé, dites données $CO2_{int}$, et de données représentatives de la quantité de CO2 contenu dans l'air extérieur audit compartiment, dites données $CO2_{ext}$,
   - une étape de calcul (12) d'un taux réel d'occupation dudit compartiment à partir desdites données $CO2_{int}$ et $CO2_{ext}$, d'informations représentatives de la quantité d'air injecté dans ledit compartiment, dites informations Qair, et d'informations représentatives du nombre de places assises libres dans ledit compartiment, dites informations Places,
   - une étape de comparaison (13) dudit taux réel d'occupation du compartiment calculé, dit Txréel, par rapport à un taux estimé d'occupation dudit compartiment, dit Txest, obtenu à partir d'informations représentatives du nombre de passagers à l'intérieur dudit compartiment, dites informations Passagers,
   - une étape de mesure (14) d'un écart, dit écart de dérive, entre Txréel et Txest supérieur à une valeur seuil prédéterminée, et
   - une étape de signalement (15) d'un défaut probable dudit capteur (7) de CO2 surveillé lorsque ledit écart de dérive est mesuré *n* fois sur un nombre *m* de trajets prédéterminés.

2. Procédé de surveillance d'au moins un capteur de CO2 selon la revendication 1, **caractérisé en ce que** ledit taux réel d'occupation dudit compartiment, Txréel, est calculé par l'équation suivante :

[Math 1]

$$Txréel = \frac{\left[\dfrac{(CO2int - CO2ext) * CO2voy}{Qair}\right]}{Places} * 100$$

Où CO2voy est fonction de la quantité de CO2 émis par un passager dudit compartiment.

3. Procédé de surveillance d'au moins un capteur de CO2 selon l'une des revendications 1 ou 2, **caractérisé en ce que** lesdites informations Qair sont issues de mesures de la quantité d'air injecté par un système de climatisation dans ledit compartiment et fournies par une base (26) de données distante.

4. Procédé de surveillance d'au moins un capteur de CO2 selon la revendication 1 à 3, **caractérisé en ce que** lesdites informations Places et lesdites informations Passagers sont fournies par une base (27) de données de gestion des ventes de billets d'accès audit véhicule.

5. Procédé de surveillance d'au moins un capteur de CO2 selon la revendication 1 à 4, **caractérisé en ce que** lesdites données représentatives de la quantité de CO2 contenu dans l'air sont des mesures de CO2 effectuées par ledit capteur de CO2 surveillé correspondant à une concentration de CO2 dans ledit compartiment.

6. Système de surveillance d'au moins un capteur (7) de CO2 agencé dans un compartiment (5) d'un véhicule de transport ferroviaire destiné à effectuer au moins un trajet prédéterminé entre deux points d'un réseau ferroviaire emprunté par ledit véhicule, comprenant :

   - au moins un capteur (7) de CO2,
   - un module (21) d'acquisition de données représentatives de la quantité de CO2 contenu dans l'air intérieur dudit compartiment fournies par le au moins un capteur CO2 surveillé, dites données $CO2_{int}$, et de données représentatives de la quantité de CO2 contenu dans l'air extérieur audit compartiment, dites données $CO2_{ext}$,

- une unité (22) de lecture et de calcul adaptée pour recevoir lesdites données $CO2_{int}$ et $CO2_{ext}$, des informations représentatives de la quantité d'air injecté dans ledit compartiment, dites informations Qair, et des informations représentatives du nombre de places assises libres dans ledit compartiment, dites informations Places, et configurée pour calculer un taux réel d'occupation dudit compartiment, dit Txréel, à partir desdites données $CO2_{int}$ et $CO2_{ext}$, desdites informations Qair, et desdites informations Places,

- un module (23) de comparaison de Txréel par rapport à un taux estimé d'occupation dudit compartiment, dit Txest, obtenu à partir des données représentatives du nombre de passagers à l'intérieur dudit compartiment, dites informations Passagers,

- un module (24) de mesure d'un écart, dit écart de dérive, entre Txréel et Txest supérieur à une valeur seuil prédéterminée, et

- un module (25) de signalement adapté pour avertir d'un défaut probable dudit capteur (7) de CO2 surveillé lorsque ledit écart de dérive est mesuré *n* fois sur un nombre *m* de trajets prédéterminés.

**7.** Système de surveillance d'au moins un capteur de CO2 selon la revendication 6, **caractérisé en ce que** ledit module d'acquisition est destiné à collecter les données fournies par des capteurs de CO2 surveillés et agencés dans différents compartiments dudit véhicule de transport ferroviaire.

**8.** Système de surveillance d'au moins un capteur de CO2 selon la revendication 6, **caractérisé en ce que** ledit module d'acquisition est destiné à collecter les données fournies par des capteurs de CO2 surveillés et agencés dans différents compartiments de plusieurs véhicules de transport ferroviaire.

**9.** Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de surveillance selon l'une des revendications 1 à 5, lorsqu'un programme est exécuté sur un ordinateur.

**10.** Moyen de stockage lisible par ordinateur, totalement ou partiellement amovible, stockant un programme d'ordinateur comprenant un jeu d'instructions exécutables par un ordinateur pour mettre en oeuvre le procédé de surveillance, selon l'une des revendications 1 à 5.

**Patentansprüche**

**1.** Verfahren (10) zur Überwachung mindestens eines CO2-Sensors, der in einem Abteil (5) eines Schienenfahrzeugs angeordnet ist, das dazu bestimmt ist, mindestens eine bestimmte Strecke zwischen zwei Punkten eines Schienennetzes zurückzulegen, die von dem genannten Fahrzeug befahren wird, **dadurch gekennzeichnet, dass** es mindestens die Schritte umfasst:

- einen Schritt der Erfassung (11) von Daten, die für die in der Luft im Inneren des Abteils enthaltene CO2-Menge repräsentativ sind, die von mindestens einem überwachten CO2-Sensor (7) geliefert werden, $CO2_{int}$-Daten genannt, und von Daten, die für die in der Luft außerhalb des Abteils enthaltene CO2-Menge repräsentativ sind, $CO2_{ext}$-Daten genannt,

- einen Schritt zur Berechnung (12) eines tatsächlichen Belegungsgrads des Abteils ausgehend von den $CO2_{int}$-Daten und $CO2_{ext}$-Daten, von Informationen, die für die in das Abteil eingeblasene Luftmenge repräsentativ sind, QLuft-Informationen genannt, und von Informationen, die für die Anzahl der freien Plätze in dem Abteil repräsentativ sind, Sitzinformationen genannt,

- einen Schritt des Vergleichens (13) des tatsächlichen Belegungsgrads des berechneten Abteils, Txreal genannt, mit einem geschätzten Belegungsgrad des Abteils, Txgesch genannt, der aus Informationen gewonnen wird, die für die Anzahl der Fahrgäste im Inneren des Abteils repräsentativ sind, Fahrgastinformationen genannt,

- einen Schritt (14) der Messung einer Differenz, Driftdifferenz genannt, zwischen Txreal und Txgesch, die größer als ein bestimmter Schwellenwert ist, und

- einen Signalisierungsschritt (15) eines wahrscheinlichen Fehlers des überwachten CO2-Sensors (7), wenn die Abweichung von der Drift n-mal über eine Anzahl m von bestimmten Wegen gemessen wird.

**2.** Verfahren zur Überwachung mindestens eines CO2-Sensors nach Anspruch 1, **dadurch gekennzeichnet, dass** die reale Belegungsrate des Abteils, Txreal, durch die folgende Gleichung berechnet wird:

[Formel 1]

$$Txreal = \frac{\left[\dfrac{(CO2int - CO2ext) * CO2^{Fg}}{QLuft}\right]}{Sitze} * 100$$

wobei CO2Fg eine Funktion der CO2-Menge ist, die von einem Fahrgast des genannten Abteils ausgestoßen wird.

3. Verfahren zur Überwachung mindestens eines CO2-Sensors nach einem der Ansprüche 1 oder 2, **dadurch gekennzeichnet, dass** die QLuft-Information aus Messungen der Luftmenge stammt, die von einer Klimaanlage in das Abteil eingeblasen wird und von einer entfernten Datenbank (26) geliefert wird.

4. Verfahren zur Überwachung mindestens eines CO2-Sensors nach einem der Ansprüche 1 bis 3, **dadurch gekennzeichnet, dass** die Sitzinformationen und die Fahrgastinformationen von einer Datenbank (27) zur Verwaltung des Verkaufs von Eintrittskarten für das Fahrzeug geliefert werden.

5. Verfahren zur Überwachung mindestens eines CO2-Sensors nach einem der Ansprüche 1 bis 4, **dadurch gekennzeichnet, dass** die Daten, die für die in der Luft enthaltene CO2-Menge repräsentativ sind, CO2-Messungen sind, die von dem überwachten CO2-Sensor entsprechend einer CO2-Konzentration in dem Abteil vorgenommen wurden.

6. System zur Überwachung mindestens eines CO2-Sensors (7), der in einem Abteil (5) eines Schienenfahrzeugs angeordnet ist, das dazu bestimmt ist, mindestens eine bestimmte Strecke zwischen zwei Punkten eines von dem Fahrzeug befahrenen Schienennetzes zurückzulegen, welches umfasst:

   - ein Modul (21) zum Erfassen von Daten, die für die in der Luft im Inneren des Abteils enthaltene CO2-Menge repräsentativ sind, die von mindestens einem überwachten CO2-Sensor geliefert werden, CO2$_{int}$-Daten genannt, und von Daten, die für die in der Außenluft des Abteils enthaltene CO2-Menge repräsentativ sind, CO2$_{ext}$-Daten genannt,
   - eine Lese- und Berechnungseinheit (22), die angepasst ist, die CO2$_{int}$- und CO2$_{ext}$-Daten, Informationen, die für die in das Abteil eingeblasene Luftmenge repräsentativ sind, sogenannte QLuft-Informationen, und Informationen, die für die Anzahl der freien Plätze in dem Abteil repräsentativ sind, sogenannte Sitzinformationen, empfängt und ausgestaltet ist, aus den CO2$_{int}$- und CO2$_{ext}$-Daten, den QLuft-Informationen und den Sitzinformationen einen tatsächlichen Belegungsgrad des Abteils, Txreal genannt, berechnet
   - ein Modul (23) zum Vergleichen von Txreal mit einem geschätzten Belegungsgrad des Abteils, Txest genannt, der aus Daten erhalten wird, die für die Anzahl der Passagiere in dem Abteil repräsentativ sind, Passagierinformationen genannt,
   - ein Modul (24) zum Messen einer Differenz, Driftdifferenz genannt, zwischen Txreal und Txest, die größer als ein bestimmter Schwellenwert ist, und
   - ein Signalisierungsmodul (25), das angepasst ist, vor einer wahrscheinlichen Störung des überwachten CO2-Sensors zu warnen, wenn die Abweichung von der Drift n-mal über eine Anzahl m von bestimmten Wegen gemessen wird.

7. System zur Überwachung mindestens eines CO2-Sensors nach Anspruch 6, **dadurch gekennzeichnet, dass** das Erfassungsmodul dazu bestimmt ist, die von überwachten und in verschiedenen Abteilen des Schienenfahrzeugs angeordneten CO2-Sensoren gelieferten Daten zu sammeln.

8. System zur Überwachung mindestens eines CO2-Sensors nach Anspruch 6, **dadurch gekennzeichnet, dass** das Erfassungsmodul dazu bestimmt ist, die von überwachten und in verschiedenen Abteilen mehrerer Schienenfahrzeuge angeordneten CO2-Sensoren gelieferten Daten zu sammeln.

9. Computerprogrammprodukt, das von einem Kommunikationsnetz heruntergeladen werden kann und/oder auf einem computerlesbaren Medium aufgezeichnet ist und/oder von einem Prozessor ausgeführt werden kann, **dadurch gekennzeichnet, dass** dieses Programmcodeanweisungen zur Implementierung der Überwachung nach einem der Ansprüche 1 bis 5 umfasst, wenn ein Programm auf einem Computer ausgeführt wird.

**10.** Vollständig oder teilweise entfernbares computerlesbares Speichermedium, auf dem ein Computerprogramm gespeichert ist, das einen Satz von computerausführbaren Anweisungen zur Durchführung des Überwachungsverfahrens nach einem der Ansprüche 1 bis 5 umfasst.

**Claims**

**1.** Method (10) for monitoring at least one CO2 sensor arranged in a compartment (5) of a rail transport vehicle intended to perform at least one predetermined route between two points of a rail network taken by the said vehicle, **characterized in that** it comprises at least the following steps: - a step of acquisition (11) of data representative of the quantity of CO2 contained in the air inside said compartment provided by at least one monitored CO2 sensor (7), called $CO2_{int}$ data, and of data representative of the quantity of CO2 contained in the air outside said compartment, known as CO2ext data,

- a step of calculating (12) an actual occupancy rate of said compartment from said CO2int and CO2ext data, information representative of the quantity of air injected into said compartment, called Qair information, and information representative the number of free seats in the said compartment, known as Seats information,
- a step of comparing (13) said actual rate of occupancy of the calculated compartment, called Txreal, with an estimated rate of occupancy of said compartment, called Txest, obtained from information representative of the number of passengers at the inside the said compartment, called Passenger information,
- a measurement step (14) of a difference, called drift difference, between Txactual and Txest greater than a predetermined threshold value, and
- a signaling step (15) of a probable fault of said monitored CO2 sensor (7) when said deviation from drift is measured n times over a number m of predetermined paths.

**2.** Method for monitoring at least one CO2 sensor according to Claim 1, **characterized in that** the said real rate of occupancy of the said compartment, Txreal, is calculated by the following equation:

[Math 1]

$$Txreal = \frac{[\frac{(CO2int - CO2ext) * CO2voy}{Qair}]}{Seats} * 100$$

where CO2voy is a function of the quantity of CO2 emitted by a passenger of said compartment.

**3.** Method for monitoring at least one CO2 sensor according to one of Claims 1 or 2, **characterized in that** the said information Qair comes from measurements of the quantity of air injected by an air conditioning system into the said compartment and supplied by a remote database (26).

**4.** Method for monitoring at least one CO2 sensor according to Claims 1 to 3, **characterized in that** the said Seat information and the said Passenger information are supplied by a database (27) for managing the sales of access tickets to the said vehicle.

**5.** Method for monitoring at least one CO2 sensor according to Claims 1 to 4, **characterized in that** the said data representative of the quantity of CO2 contained in the air are CO2 measurements taken by the said monitored CO2 sensor corresponding to a CO2 concentration in said compartment.

**6.** System for monitoring at least one CO2 sensor (7) arranged in a compartment (5) of a rail transport vehicle intended to perform at least one predetermined route between two points of a rail network taken by said vehicle, comprising :

- a module (21) for acquiring data representative of the quantity of CO2 contained in the air inside said compartment provided by at least one monitored CO2 sensor, called CO2int data, and data representative of the quantity of CO2 contained in the outside air to said compartment, say CO2ext data,
- a reading and calculation unit (22) adapted to receive said CO2int and CO2ext data, information representative of the quantity of air injected into said compartment, called Qair information, and information representative of the number of free seats in said compartment, called Places information, and configured to calculate an actual occupancy rate of said compartment, called Txactual, from said CO2int and CO2ext data, from said Qair information, and from said Places information,

- a module (23) for comparing Txactual with an estimated occupancy rate of said compartment, called Txest, obtained from data representative of the number of passengers inside said compartment, called Passenger information,

- a module (24) for measuring a difference, called drift difference, between Txactual and Txest greater than a predetermined threshold value, and

- a signaling module (25) adapted to warn of a probable fault of said monitored CO2 sensor when said deviation from drift is measured n times over a number m of predetermined paths.

7. System for monitoring at least one CO2 sensor according to claim 6, **characterized in that** said acquisition module is intended to collect the data provided by CO2 sensors monitored and arranged in different compartments of said rail transport vehicle.

8. System for monitoring at least one CO2 sensor according to claim 6, **characterized in that** said acquisition module is intended to collect the data supplied by CO2 sensors monitored and arranged in different compartments of several rail transport vehicles.

9. Computer program product downloadable from a communication network and/or recorded on a computer-readable medium and/or executable by a processor, **characterized in that** it comprises program code instructions for implementing the monitoring according to one of Claims 1 to 5, when a program is executed on a computer.

10. Fully or partially removable computer-readable storage medium storing a computer program comprising a set of computer-executable instructions for implementing the monitoring method, according to one of claims 1 to 5.

[Fig. 1]

[Fig. 2]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2014189155 A